# EUROPÄISCHE PATENTSCHRIFT

(11) **EP 0 797 739 B1**
(45) Veröffentlichungstag und Bekanntmachung des Hinweises auf die Patenterteilung: **14.07.1999**
(21) Anmeldenummer: 95940948.3
(22) Anmeldetag: 12.12.1995
(51) Int. Cl.: F16D 67/04, B30B 15/10

(54) **DRUCKMITTELBETÄTIGTE KUPPLUNG UND BREMSE**
HYDRAULICALLY CONTROLLED CLUTCH AND BRAKE
EMBRAYAGE ET FREIN A COMMANDE HYDRAULIQUE

(30) Priorität: 13.12.1994 DE 4444282
(43) Veröffentlichungstag der Anmeldung: 01.10.1997
(73) Patentinhaber: SMS Eumuco GmbH, 51377 Leverkusen (DE)
(72) Erfinder: KREISL, Joachim, D-51373 Leverkusen (DE); GOBER, Norbert, D-51519 Odenthal (DE)
(74) Vertreter: Pollmeier, Felix, Dipl.-Ing.
(86) Internationale Anmeldenummer: DE9501776
(87) Internationale Veröffentlichungsnummer: WO9618830

(56) Entgegenhaltungen:
- EP-A- 0 174 256
- EP-A- 0 287 472
- DE-A- 1 425 271
- DE-U- 9 014 112
- GB-A- 2 041 480

## Beschreibung

Die Erfindung bezieht sich auf die Anordnung von druckmittelbetätigter Kupplung und Bremse im Antrieb von mechanischen Pressen und Scheren zur Massiv- und Blechumformung, wobei zu unterscheiden ist zwischen Antrieben mit getrennter und mit kombinierter Anordnung von Kupplung und Bremse.

Bei getrennt angeordneter Kupplung und Bremse (DE 21 00 536 B1, DE 21 23 330 A1) ist die Lage der Kupplung an dem einen und die Lage der Bremse an dem anderen Wellenende der Antriebswelle und entsprechend separaten Anschlüssen für die Betätigung und für die Kühlung charakteristisch. Bei kombiniert angeordneter Kupplung und Bremse (DE 27 53 534 A1, EP 0 174 256 A1, EP 0 287 472 A1) sind die Kupplung und die Bremse in Kombination an einem Wellenende der Antriebswelle gelegen.

Vorteilhaft für die kombinierte Anordnung von Kupplung und Bremse sind der einfache Steuerungsaufbau infolge nur eines federgefesselten Betätigungskolbens, die Inanspruchnahme nur eines Wellenendes der Antriebswelle und die Verlegung der Zuleitung von Druck- und Kühlmedium von der Versorgungszentrale aus, zu nur einem Wellenende. Der Aufwand für Abdichtungen gegenüber anderen Maschinenelementen ist ebenfalls geringer und die Montage läßt sich vereinfacht ausführen. Infolge nur eines Betätigungskolbens vereinfacht sich der Steuerungsaufbau des weiteren dadurch, daß nur ein Pressen-Sicherheitsventil erforderlich ist. Für einige Maschinentypen verändert die einseitige Anbringung auch die gesamte Formgestaltung der Maschine positiv, im Sinne einer kompakten Gesamtkontur.

Demgegenüber besteht jedoch ein erheblicher Nachteil gegenüber der getrennten Anordnung von Kupplung und Bremse in dem Schaltzeitverlust zwischen dem Ein- und Ausschaltvorgang von Kupplung und Bremse durch den Wegzeitverlust des einizig vorhandenen Betätigungskolbens. Insbesondere bei sehr großen Betätigungsvolumen können diese Zeitverluste der Erhöhung der Einzelschaltzahlen der Maschine entgegenstehen. Des weiteren ist das Triebwerk des Stößels in der Schaltphase weder durch die Kupplung kontrolliert bewegt noch durch die Bremse festgehalten, was zu ungewünschtem Selbstlauf des Stößels führen kann.

Das Ziel der Erfindung besteht in der Anordnung von Kupplung und Bremse an Pressen in der Weise, die die oben genannten Nachteile der kombinierten Anordnung vermeidet indem sie eine getrennte Betätigung von Kupplung und Bremse erlaubt und dennoch die Anordnung an einem Wellenende ermöglicht.

Ausgehend von einer aus der EP 0 174 256 A1 bekannten Presse mit an einem Wellenende der Antriebswelle angeordneter Kombination einer Kupplung und einer Bremse, bei der ein mit der Antriebswelle verbundener Lamellenträger wechselweise durch von einem Kolben zu schließenden Kupplungslamellen mit einem mit einem Schwungrad verbundenen Kupplungsgehäuse und durch von Federn zu schließenden Bremslamellen mit einem mit einer als Lagerzapfen für das Schwungrad dienenden Hohlachse verbundenen Bremsgehäuse verbindbar ist, wobei der Lamellenträger mit Kühlölleitungen zu den Kupplungslamellen und den Bremslamellen versehen ist, liegt der Erfindung die Aufgabe zugrunde, bei getrennter Betätigung von Kupplung und Bremse deren Anordnung an einer Seite der Antriebswelle zu ermöglichen und damit eine komplette Baueinheit hinsichtlich der Montage und der Verlegung der Rohrleitungen von der Versorgungsstation zum Antrieb zu schaffen. Des weiteren soll eine undefinierte Schwebestellung des Stößels während des Umschaltens von Kupplung auf Bremse und umgekehrt vermieden werden.

Erfindungsgemäß wird dies dadurch erreicht, daß die Kupplung mit sie lüftenden Kupplungsfedern und einem sie schließenden Kupplungskolben und die Bremse mit sie schließenden Druckfedern und einem sie lüftenden Bremskolben versehen sind, wobei die Hohlachse mit sie durchsetzenden Kanälen für die Druckmittelzufuhr zum Druckraum der Bremse versehen ist.

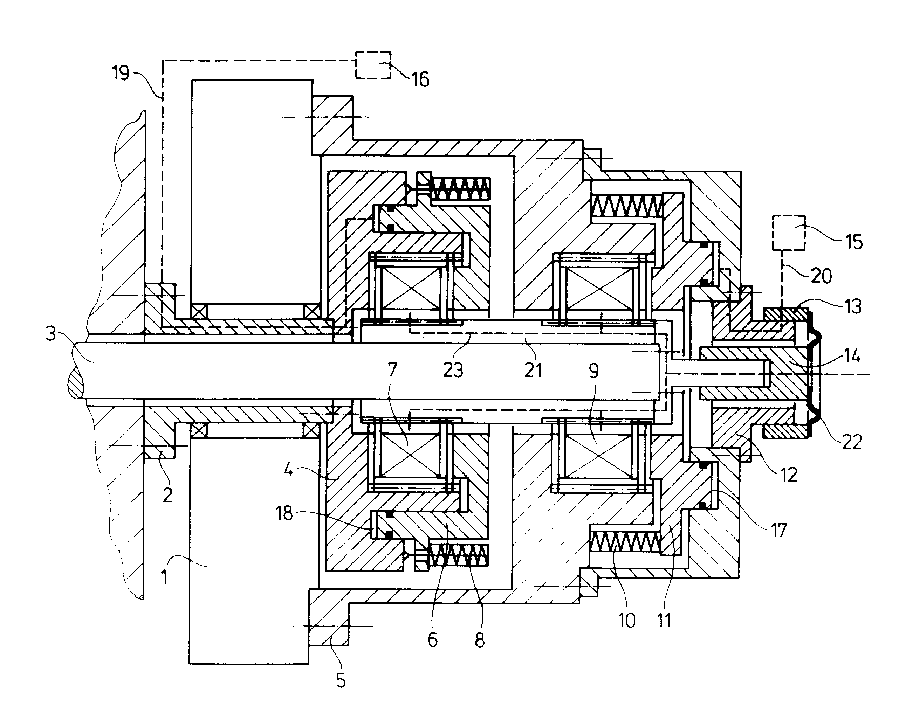

Eine zweckmäßige Form der Realisierung der Erfindung wird nachstehend an einem Ausführungsbeispiel näher erläutert. Die Zeichnung zeigt eine erfindungsgemäße Kupplung und Bremse. Das Schwungrad 1 ist auf der Hohlachse 2 gelagert. An die mit dem Maschinenkörper fest verbundene Hohlachse 2 ist das Bremsgehäuse 4 mit den Bremslamellen 7 angeschlossen. Im Bremsgehäuse 4 und koaxial zu den Bremslamellen 7, ist der sich gegen die Bremsfedern 8 abstützende Bremskolben 6 gelagert. Die Druckmittelzufuhr zum Druckraum der Bremse 18 erfolgt durch die Zuleitung 19 vom Pressen-Sicherheitsventil 16 durch die Hohlachse 2.

Bremsgehäuse 4, Bremskolben 6, Druckfedern 8 und Bremslamellen 7 bilden gemeinsam die Bremseinheit. Durch Betätigung des Pressen-Sicherheitsventils 16 wird die Bremse gegen die Federkraft der Bremsfedern 8 gelöst. Am Schwungrad 1 befestigt ist das Kupplungsgehäuse 5 mit den Kupplungslamellen 9, den Kupplungsfedern 10, dem Kupplungskolben 11 und dem Druckanschluß 12.

Durch Betätigung des Pressen-Sicherheitsventils 15 wird die Kupplung gegen die Federkraft der Kupplungsfedern 10 geschlossen, dabei gelangt das Druckmedium über das drehfeste Gehäuse mit Druckanschluß 13 über den rotierenden Druckanschluß 12 in den Druckraum 17 der Kupplung. Koaxial zum Druckanschluß 12 der Kupplung liegt das drehfeste Gehäuse 14 zum Drehabschluß für die Einführung des Kühlmediums in den Lamellenträger 21, welcher mit der Antriebswelle 3 verbunden ist. Um einen durch Mittigkeitsversatz der Antriebswelle 3 zum Schwungrad 1 möglichen Zwang von An- und Abtriebselementen in eingekuppeltem Zustand zu vermeiden, ist eine radial nachgiebige Abdichtung 22 vorgesehen. Das Kühlmittel für Kupplung und Bremse wird durch eine gemeinsame Drehdurchführung zugeführt. Die Abfuhr des Kühlmittels ist nicht dargestellt, sie erfolgt in bekannter Weise durch die Hohlachse 4, durch das Schwungrad 1 oder in ein nicht dargestelltes gemeinsames Gehäuse von Kupplung und Bremse. Die Vormontage und damit Vorabnahme von Kupplung und Bremse kann in zwei separaten Betätigungseinheiten erfolgen, die sich beim Anbau an die Presse zu einer kompakten Bauweise, ähnlich der kombinierten Einrichtungen an einer Seite der Antriebswelle 3 zusammenfassen lassen.

## Patentansprüche

1. An einem Wellenende der Antriebswelle (3) einer Presse angeordnete Kombination einer Kupplung und einer Bremse, wobei ein mit der Antriebswelle (3) verbundener Lamellenträger (21) wechselweise durch von einem Kolben (17) zu schließende Kupplungslamellen (9) mit einem mit einem Schwungrad (1) verbundenen Kupplungsgehäuse (5) und durch von Federn (8) zu schließende Bremslamellen (7) mit einem mit einer als Lagerzapfen für das Schwungrad (1) dienenden Hohlachse (2) verbundenen Bremsgehäuse (4) verbindbar ist, und der Lamellenträger (21) mit einer Kühlölleitung (23) zu den Kupplungslamellen (9) und den Bremslamellen (7) versehen ist,
**dadurch gekennzeichnet,**
daß zur getrennten Betätigung von Kupplung und Bremse die Kupplung mit sie lüftenden Kupplungsfedern (10) und einem sie schließenden Kupplungskolben (11) und die Bremse mit sie schließenden Druckfedern (8) und einem sie lüftenden Bremskolben (6) versehen sind, wobei die Hohlachse (2) mit sie duchsetzenden Kanälen für die Druckmittelzufuhr (19) zum Druckraum (18) der Bremse versehen ist.

2. Anordnung nach Anspruch 1,
**dadurch gekennzeichnet,**
daß das an der Hohlachse (2) angebrachte Bremsgehäuse (4) einen koaxial zu den Bremslamellen (7) liegenden Druckraum (18) aufweist und daß dieser Druckraum (18) im Durchmesser über den Lamellen (7) liegt.

3. Anordnung nach Anspruch 1 oder 2,
**dadurch gekennzeichnet,**
daß der Druckanschluß für die Kupplung (13) und der Kühlölanschluß (14) am freien Wellenende koaxial zueinander angeordnet sind und das eine elastische Abdichtung (22) den Abschluß der Kupplung und Bremse bildet.

## Claims

1. A combination of a clutch and brake arranged at a shaft end of the drive shaft (3) of a press, wherein a plate carrier (21) connected with the drive shaft (3) is alternately connectible by clutch plates (9), which are to be applied by a piston (17), with a clutch housing (5) connected with a flywheel (1) and by brake plates (7), which are to be applied by springs (8), with a brake housing (4) connected with a hollow axle (2) serving as bearing pin for the flywheel (1), and the plate carrier (21) is provided with a cooling oil duct (23) to the clutch plates (9) and brake plates (7), characterised in that for the separate actuation of clutch and brake the clutch is provided with clutch springs (10) releasing it and a brake piston (11) applying it and the brake is provided with compression springs (8) applying it and a brake piston (6) releasing it, wherein the hollow axle (2) is provided with channels, which pass through it, for pressure medium feed (19) to the pressure chamber (18) of the brake.

2. Arrangement according to claim 1, characterised in that the brake housing (4) mounted at the hollow axle (2) has a pressure chamber (18) disposed coaxially with the brake plates (7) and that this pressure chamber (18) lies above the plates (7) in diameter.

3. Arrangement according to claim 1 or 2, characterised in that the pressure connection for the clutch (13) and the clutch oil connection (14) are arranged coaxially to one another at the free shaft end and that a resilient seal (22) forms the termination of the clutch and brake.

## Revendications

1. Combinaison d'un embrayage et d'un frein agencée sur l'extrémité d'un arbre moteur (3) d'une presse, dans laquelle un support de disques (21) relié à l'arbre moteur (3) est susceptible d'être relié alternativement par des disques d'embrayage (9) à fermer par un piston avec un carter d'embrayage (5), et par des disques de freinage (7) à fermer par des ressorts (8) avec un carter de frein (4) relié à un axe creux (2) servant de tourillon pour le volant d'inertie (1), et le support de disques (21) étant pourvu d'une conduite d'huile de refroidissement (23) menant aux disques d'embrayage (9) et aux disques de frein (7), caractérisée en ce que pour actionner séparément l'embrayage et le frein, l'embrayage est pourvu de ressorts d'embrayage (10) l'ouvrant et d'un piston d'embrayage (11) le fermant, et le frein est pourvu de ressorts de compression (8) le fermant et d'un piston de freinage (6) l'ouvrant, l'axe creux (2) étant pourvu de canaux le traversant pour l'amenée de fluide sous pression (19) vers la chambre de pression (18) du frein.

2. Agencement selon la revendication 1, caractérisé en ce que le carter de frein (4) monté sur l'arbre creux présente une chambre de pression (18) située coaxialement par rapport aux disques de freinage (7) et en ce que cette chambre de pression (18) se trouve dans le diamètre situé au-delà des disques (7).

3. Agencement selon l'une ou l'autre des revendications 1 et 2, caractérisé en ce que le raccord de pression pour l'embrayage (13) et le raccord d'huile de refroidissement (14) sont agencés coaxialement l'un par rapport à l'autre sur l'extrémité libre de l'arbre, et en ce qu'un joint élastique (22) forme la fermeture de l'embrayage et du frein.
